# EUROPEAN PATENT APPLICATION

(11) **EP 4 628 925 A1**
(43) Date of publication of application: **08.10.2025**
(21) Application number: 24806074.1
(22) Date of filing: 16.01.2024
(51) Int. Cl.: G01S 7/41, G01S 13/88

(54) **ENVIRONMENTAL GRAYSCALE WIRELESS SENSING METHOD AND DEVICE, AND COMPUTER-READABLE MEDIUM**

(30) Priority: 18.05.2023 CN 202310566282
(71) Applicant: ZTE CORPORATION, Shenzhen, Guangdong 518057 (CN)
(72) Inventor: CHEN, Shijun, Shenzhen, Guangdong 518057 (CN); LI, Junqiang, Shenzhen, Guangdong 518057 (CN); CHEN, Dawei, Shenzhen, Guangdong 518057 (CN); XIA, Shuqiang, Shenzhen, Guangdong 518057 (CN)
(74) Representative: Canzler & Bergmeier Patentanwälte Partnerschaft mbB
(86) International application number: PCT/CN2024/072503
(87) International publication number: WO 2024/234710

(57) **Abstract**

An environmental grayscale wireless sensing method and device, and a computer-readable medium. The method comprises: acquiring time-domain impulse responses of sensing echo signals received by a receiving end (S101), wherein the sensing echo signals are signals formed by sensing signals which are simultaneously transmitted from a transmitting end toward a continuous spatial range and are transmitted to the receiving end; according to the time-domain impulse responses of the sensing echo signals, determining angular energy of the receiving end in each angular direction within a predetermined continuous angle range (S102), wherein the angular energy represents the intensity of the time-domain impulse response of the sensing echo signal in the angular direction; and determining an environmental grayscale image of the receiving end according to the angular energy in the plurality of angular directions (S103), wherein the environmental grayscale image comprises pixels corresponding to the angular directions, and grayscale values of the pixels represent the angular energy in the corresponding angular directions.

## Description

### TECHNICAL FIELD

The present disclosure relates to the field of environmental sensing technology, and in particular, to a method and device of wirelessly sensing environmental grayscale and a computer-readable medium.

### BACKGROUND

At present, an important characteristic of the fourth industrial revolution is ubiquitous intelligence. The intelligent technology penetrates into people's lives, and brings great convenience and brand new experience to people's lives; meanwhile, the intelligent technology also penetrates into all walks of life, and industrial upgrading and improvement in industrial efficiency are realized through intelligence.

The ubiquitous intelligent technology includes the ubiquitous sensing technology and the ubiquitous computing technology. Therefore, the ubiquitous intelligence needs to be implemented through a ubiquitous system. Among various systems which are currently deployed, merely wireless communication networks can meet requirements of ubiquity, so that performing ubiquitous sensing and ubiquitous computing through the wireless communication networks becomes a main feasible technical solution, for example, performing environmental sensing using the widely available wireless networks is one of important requirements in the era of the sixth generation (6G) mobile communication.

Currently, the main environmental sensing techniques include radar sensing and visual sensing. A radar sends radar signals in each direction of the space and receives transmitted signals to form point cloud, and then back-end processing is performed to obtain an environmental sensing result. The visual sensing needs to use a camera, and obtains environmental sensing data by performing image segmentation and image recognition. The above two environmental sensing methods both need special hardware in use, and cannot realize ubiquitous environmental sensing.

If a communication base station (wireless communication base station) is used to perform environmental sensing on the principle of radar sensing, the communication base station needs to be implemented as a full-duplex base station capable of performing transmission and reception, but the current full-duplex technology has not made a breakthrough, and there are key challenges in the aspects of isolation and interference elimination, such that the communication base stations in the existing networks mainly adopt a time division mode and a frequency division mode. Therefore, cooperation of a transmitting base station and a receiving base station is needed if performing environmental sensing using the communication base stations in the existing networks, but the research on environmental sensing using cooperation of a plurality of stations is still in a blank stage at present; meanwhile, for performing environmental sensing using the communication base stations on the principle of radar sensing, a transmitter needs to traverse spatial directions to send the signals, resulting in poor real-time performance.

In a word, performing environmental sensing by the communication base stations needs the communication base stations to meet high preset conditions and has poor real-time performance, resulting in high cost and limited practical application.

### SUMMARY

The present disclosure provides a method and device of wirelessly sensing environmental grayscale, and a computer-readable medium.

In a first aspect, an embodiment of the present disclosure provides a method of wirelessly sensing environmental grayscale, including acquiring time-domain impulse responses of sensing echo signals received by a receiving end, wherein the sensing echo signals are signals formed when sensing signals simultaneously transmitted by a transmitting end within a continuous spatial range arrive at the receiving end; determining an angular energy of the receiving end in each of a plurality of angular directions within a preset continuous angle range based on the time-domain impulse responses of the sensing echo signals, wherein the angular energy represents a strength of the time-domain impulse responses of the sensing echo signals in the angular direction; and determining an environmental grayscale image of the receiving end based on angular energies in the plurality of angular directions, wherein the environmental grayscale image includes pixels corresponding to the angular directions, and grayscale values of the pixels represent the angular energies in corresponding angular directions.

In a second aspect, an embodiment of the present disclosure provides a device of wirelessly sensing environmental grayscale, including a memory and a processor, the memory stores a computer program executable by the processor, and when the computer program is executed by the processor, the method of wirelessly sensing environmental grayscale according to any embodiment of the present disclosure is implemented.

In some embodiments, the device of wirelessly sensing environmental grayscale is the receiving end.

In a third aspect, an embodiment of the present disclosure provides a computer-readable medium having stored thereon a computer program which, when executed by a processor, implements the method of wirelessly sensing environmental grayscale according to any embodiment of the present disclosure.

In the embodiments of the present disclosure, the receiving end determines the environmental grayscale image capable of representing distribution of objects in an environment by analyzing the angular energy in each of the plurality of angular directions, so as to achieve environmental sensing (environmental grayscale sensing). Merely the angular energy in each of the plurality of angular directions needs to be obtained, and there is no need to determine the sensing signal from which direction causes the angular energy (sensing echo signal). Thus, the sensing signals transmitted by the transmitting end are not desired to have high directivity (for example, the sensing signals may be transmitted in an omnidirectional manner) and do not need to be transmitted in different directions at different times, and the transmitting end and the receiving end do not need to be synchronized with each other, resulting low preset conditions, good real-time performance, low cost, and easy practical application.

### BRIEF DESCRIPTION OF DRAWINGS

In the drawings for the embodiments of the present disclosure:
FIG. 1 is a flowchart illustrating a method of wirelessly sensing environmental grayscale according to an embodiment of the present disclosure;
FIG. 2 is another flowchart illustrating a method of wirelessly sensing environmental grayscale according to an embodiment of the present disclosure;
FIG. 3 is a schematic diagram of a scenario of applying a method of wirelessly sensing environmental grayscale according to an embodiment of the present disclosure;
FIG. 4 is a schematic diagram of a delay Doppler spectrum for one antenna in a method of wirelessly sensing environmental grayscale according to an embodiment of the present disclosure;
FIG. 5 is a schematic diagram of a delay angle spectrum in a method of wirelessly sensing environmental grayscale according to an embodiment of the present disclosure;
FIG. 6 is an environmental grayscale image of a receiving end 1 in a method of wirelessly sensing environmental grayscale according to an embodiment of the present disclosure;
FIG. 7 is an environmental grayscale image of a receiving end 2 in a method of wirelessly sensing environmental grayscale according to an embodiment of the present disclosure;
FIG. 8 is an environmental grayscale image in a method of wirelessly sensing environmental grayscale according to an embodiment of the present disclosure;
FIG. 9 is a block diagram of a device of wirelessly sensing environmental grayscale according to an embodiment of the present disclosure; and
FIG. 10 is a block diagram of a computer-readable medium according to an embodiment of the present disclosure.

### DETAIL DESCRIPTION OF EMBODIMENTS

In order to enable those of ordinary skill in the art to better understand the technical solutions of the present disclosure, a method and device of wirelessly sensing environmental grayscale, and a computer-readable medium provided by the embodiments of the present disclosure are described in detail below with reference to the drawings.

The present disclosure will be described more fully below with reference to the drawings, but the embodiments illustrated may be embodied in different forms, and the present disclosure should not be interpreted as being limited to the embodiments described below. Rather, the embodiments are provided to make the present disclosure thorough and complete, and are intended to enable those of ordinary skill in the art to fully understand the scope of the present disclosure.

The drawings for the embodiments of the present disclosure are intended to provide a further understanding of the embodiments of the present disclosure and constitute a part of the specification. Together with the specific embodiments of the present disclosure, the drawings are used to explain the present disclosure, but do not constitute any limitation to the present disclosure. The above and other features and advantages will become more apparent to those of ordinary skill in the art from the description of the specific embodiments with reference to the drawings.

The present disclosure can be described with reference to plans and/or cross-sectional views with the aid of idealized schematic diagrams of the present disclosure. Accordingly, the exemplary drawings may be modified according to manufacturing techniques and/or tolerances.

All the embodiments of the present disclosure and the features therein may be combined with each other if no conflict is incurred.

The terms used herein are merely used to describe specific embodiments, and are not intended to limit the present disclosure. The term "and/or" used herein includes one associated listed item or any and all combinations of more than one associated listed items. The terms "one" and "the" used herein which indicate a singular form are intended to include a plural form, unless expressly stated in the context. The terms "include" and "be made of" used herein indicate the presence of the described features, integers, operations, elements and/or components, but do not exclude the presence or addition of one or more other features, integers, operations, elements, components and/or combinations thereof.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein

The present disclosure are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

The ubiquitous intelligent technology gradually penetrates into people's daily lives and all walks of life, and provides great assistance for people's lives and industrial upgrading.

Environmental sensing is one of the intelligent applications, and can be implemented by scanning a surrounding environment with a radar or acquiring images of the surrounding environment with a camera, but the implementations both need special hardware in use, and cannot be realized in a ubiquitous way. Since communication signals are widely present in various environments, it is feasible to perform environmental sensing by communication base stations.

In some related technologies, the communication station may be used to perform environmental sensing in a manner similar to that by the radar, that is, one communication station transmits a signal and then receives a corresponding echo signal, and determines situations of objects in a surrounding environment by analyzing the echo signal. However, this method needs the communication base station to transmit and receive the signals simultaneously, so that merely a full-duplex communication base station can perform this method, resulting in a high preset condition.

In some other related technologies, environmental sensing may be performed by cooperation of a plurality of communication base stations, that is, a transmitting communication base station transmits signals in different directions at different times, and a receiving communication base station receives corresponding echo signals, and analyzes relationships between the echo signals and the transmitted signals to determine paths traveled by the echo signals. However, this method needs the transmitting communication station to transmit highly directional signals in a plurality of different directions, and needs the transmitting communication station to synchronize with the receiving communication station (so as to determine when the transmitted signals causing the echo signals are sent), so that this method also has a high preset condition.

Therefore, the techniques for performing environmental sensing by the communication base station in the related technologies has the disadvantages of high preset conditions, poor real-time performance, high cost, and limited practical application.

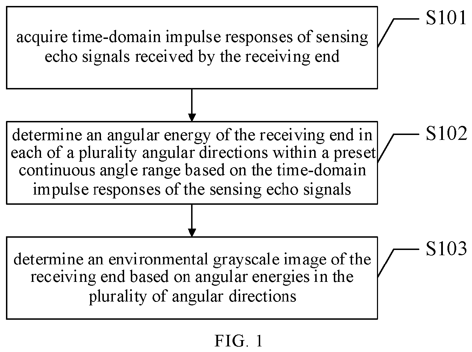

In a first aspect, referring to FIG. 1 to FIG. 8, the embodiments of the present disclosure provide a method of wirelessly sensing environmental grayscale.

The embodiments of the present disclosure are intended to achieve environmental sensing (environmental grayscale sensing), and more specifically, to achieve cooperative environmental sensing, that is, to analyze signals transmitted by a transmitting end and signals received by a receiving end, so as to determine distribution of objects in an environment (such as directions in which the objects are located).

In some embodiments, the transmitting end is a communication base station, and the receiving end is a communication base station.

In an implementation of the embodiments of the present disclosure, the communication base stations may be directly used as the transmitting end and the receiving end, and since the communication base stations are widely available currently and have capabilities of transmitting and receiving signals in essence, the communication base stations can be used to achieve ubiquitous environmental sensing.

It should be understood that it is also possible that the transmitting end and the receiving end are other devices having the capabilities of transmitting and receiving signals.

Referring to FIG. 1, a method of wirelessly sensing environmental grayscale according to an embodiment of the present disclosure includes the following operations S101 to S103.

At operation S101, time-domain impulse responses of sensing echo signals received by the receiving end are acquired.

The sensing echo signals are signals formed when sensing signals simultaneously transmitted by the transmitting end within a continuous spatial range arrive at the receiving end.

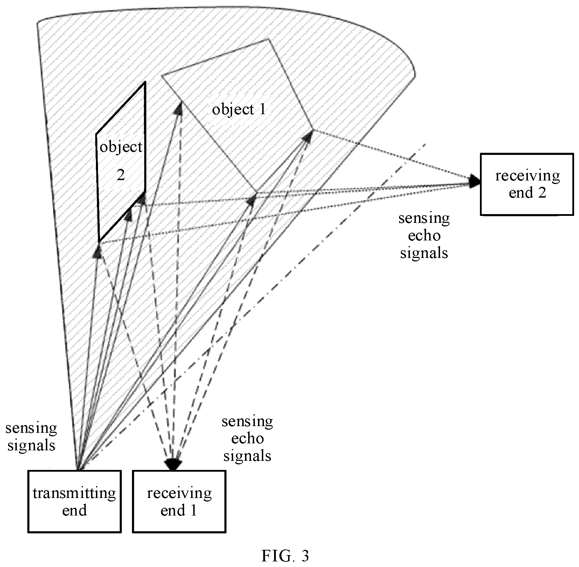

Referring to FIG. 3, when environmental sensing (environmental grayscale sensing) needs to be performed, the transmitting end simultaneously transmits the "sensing signals (belonging to wireless signals)" in all directions within a spatial range (i.e., the continuous spatial range, such as an oblique line region in FIG. 3), the sensing signals in some directions may be transmitted to receiving ends (a receiving end 1 and a receiving end 2) through, for example, one or more times of reflection transmission by objects (an object 1 and an object 2) in the environment (or through direct transmission), and the sensing signals transmitted to the receiving ends are received by the receiving ends as the "sensing echo signals". Therefore, the sensing echo signals can reflect the distribution of the objects in the environment.

It should be understood that the "continuous spatial range" may be an entire 360-degree range around the transmitting end or a preset partial range thereof.

Since the sensing signals transmitted by the transmitting end are not desired to have high directivity, the transmitting end may transmit wide-beam sensing signals, for example, the sensing signals in all directions in the oblique line region in FIG. 3 may be signals of one beam.

Referring to FIG. 3, for clarity, the sensing signals are indicated by solid arrows, and the sensing echo signals received by the different receiving ends are indicated by different dashed arrows.

In the embodiments of the present disclosure, the sensing echo signals received by the receiving end are analyzed to obtain the time-domain impulse responses thereof.

In some embodiments, the sensing signals are omnidirectional signals transmitted once by the transmitting end; or, the sensing signals are transmitted by the transmitting end in a plurality of directions for a plurality of times.

According to the embodiments of the present disclosure, synchronization between the transmitting end and the receiving end is not needed, so that the transmitting end just needs to simultaneously transmit the sensing signals within the continuous spatial range, and specifically, the sensing signals may be transmitted once in an omnidirectional manner or transmitted in a plurality of directions for a plurality of times.

For each transmitting end, one or more receiving ends may be provided, and in a case where a plurality of receiving ends are provided, the sensing echo signals received by each of the receiving ends may be processed respectively with the method according to the embodiments of the present disclosure.

The transmitting end and the receiving end may be synchronous or not.

Configuration information such as time information, time-frequency resource information, and frequency information of the sensing signals may be sent (for example, by a control server) to the transmitting end and the receiving end in advance, so as to enable the transmitting end to transmit the corresponding sensing signal, and enable the receiving end to distinguish the sensing echo signals from all received signals.

At operation S102, an angular energy of the receiving end in each of a plurality of angular directions within a preset continuous angle range is determined based on the time-domain impulse responses of the sensing echo signals.

The angular energy represents a strength of the time-domain impulse responses of the sensing echo signals in the angular direction.

The time-domain impulse responses of the sensing echo signals within a certain continuous angle range is further analyzed to determine the strengths of the time-domain impulse responses of the receiving end in a plurality of directions (Angles of Arrival (AOAs)) within the angle range, i.e., the angle energies in the plurality of angular directions.

It should be understood that the "continuous angle range" may be an entire 360-degree range around the receiving end or a preset partial range thereof.

At operation S103, an environmental grayscale image of the receiving end is determined based on angular energies in the plurality of angular directions.

The environmental grayscale image includes pixels corresponding to the angular directions, and grayscale values of the pixels represent the angular energies in corresponding angular directions.

Referring to FIG. 3, when the sensing signals are transmitted to the receiving ends through the reflection by the different objects (or directly transmitted to the receiving ends), the sensing echo signals are different in delay and attenuation, and have different AOAs (angular directions) relative to the receiving ends, so that the receiving ends have different angular energies in different angular directions, and the difference in the angular energies may reflect the distribution of the objects in the environment.

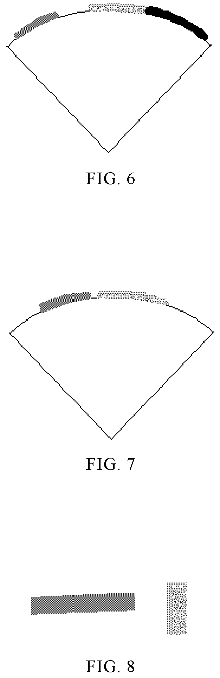

In an image (e.g., a radar map), there is a determined position (pixel) corresponding to each angular direction. Thus, referring to FIG. 6 and FIG. 7, in the embodiments of the present disclosure, a corresponding environmental grayscale image is established for each receiving end according to the angular energy of the receiving end in each of the angular directions, and the grayscale value of each pixel in the environmental grayscale image is determined according to the angular energy in a corresponding angular direction.

Therefore, the grayscale value of each pixel in the environmental grayscale image can reflect the angular energy in the corresponding angular direction, that is, reflecting the distribution of objects in the corresponding angular direction, so that the environmental grayscale image of each receiving end can represent the distribution of the objects around the receiving end, and thus can be used as an environmental sensing result.

A specific way in which the grayscale values correspond to the angular energies may be set as required.

For example, when the grayscale values are brightness levels within a certain range (0 to 255), an angular energy range (a range from a theoretical minimum value to a theoretical maximum value) may be equally divided into 256 parts, and a specific angular energy is assigned with a grayscale value of a corresponding brightness level according to the part of the angular energy range to which the specific angular energy belongs.

A specific form of the environmental grayscale image may be determined according to the continuous angle range.

For example, if the continuous angle range is an azimuth angle range at a determined elevation angle, a range to be actually sensed is a plane at the elevation angle, and a corresponding environmental grayscale image is a "line", with different positions of the line provided with different grayscale values.

Specifically, as shown in FIG. 6, for the receiving end 1 in FIG. 3, the receiving end 1 receives the sensing echo signals within three ranges of angular directions, and two of the three ranges of angular directions are connected to each other, so that there are "three" lines with different grayscale values in an environmental grayscale image of the receiving end 1, and two of the three lines are connected to each other.

Specifically, as shown in FIG. 7, for the receiving end 2 in FIG. 3, the receiving end 2 receives the sensing echo signals within two separate ranges of angular directions, so that there are "two" separate lines with different grayscale values in an environmental grayscale image of the receiving end 2.

Referring to FIG. 6 and FIG. 7, for clarity, the region between two straight lines is used to represent the continuous angle range, and the curved thin solid lines represent the pixels having the grayscale values of 0 in the environmental grayscale images, and the "lines" representing the other pixels having the grayscale values other than 0 are widened.

For example, referring to FIG. 8, if the continuous angle range includes different elevation angle ranges and azimuth angle ranges, the range to be sensed is a "spatial region", and the corresponding environmental grayscale image is a "plane", with different positions of the plane provided with different grayscale values.

In the embodiments of the present disclosure, the receiving end determines the environmental grayscale image capable of representing the distribution of the objects in the environment by analyzing the angular energy in each of the angular directions, so as to achieve environmental sensing (environmental grayscale sensing). Merely the angular energy in each of the angular directions needs to be obtained, and there is no need to determine the sensing signal from which direction causes the angular energy (sensing echo signal). Thus, the sensing signals transmitted by the transmitting end are not desired to have high directivity (for example, omnidirectionally transmitted sensing signals) and do not need to be transmitted in different directions at different times, and the transmitting end and the receiving end do not need to be synchronized with each other, resulting low preset conditions, good real-time performance, low cost, and easy practical application.

In some embodiments, determining the angular energy of the receiving end in each of the plurality of angular directions within the preset continuous angle range based on the time-domain impulse responses of the sensing echo signals (S102) includes the following operations S1021 and S1022.

At operation S1021, a delay Doppler spectrum is determined based on the time-domain impulse responses of the sensing echo signals.

At operation S1022, the angular energy of the receiving end in each of the plurality of angular directions within the preset continuous angle range is determined based on the delay Doppler spectrum.

In some embodiments, determining the angular energy of the receiving end in each of the plurality of angular directions within the preset continuous angle range based on the delay Doppler spectrum (S1022) includes the following operations S10221 and S10222.

At operation S10221, environment data is extracted from the delay Doppler spectrum.

The environment data is data in the delay Doppler spectrum which has an absolute value of a frequency shift being less than a preset threshold.

At operation S10222, the angular energy of the receiving end in each of the plurality of angular directions within the preset continuous angle range is determined based on the environment data.

In an implementation of the embodiments of the present disclosure, the "delay Doppler spectrum" including both time domain information and frequency domain information may be obtained based on the time-domain impulse responses, and then the angular energy may be determined based on the delay Doppler spectrum.

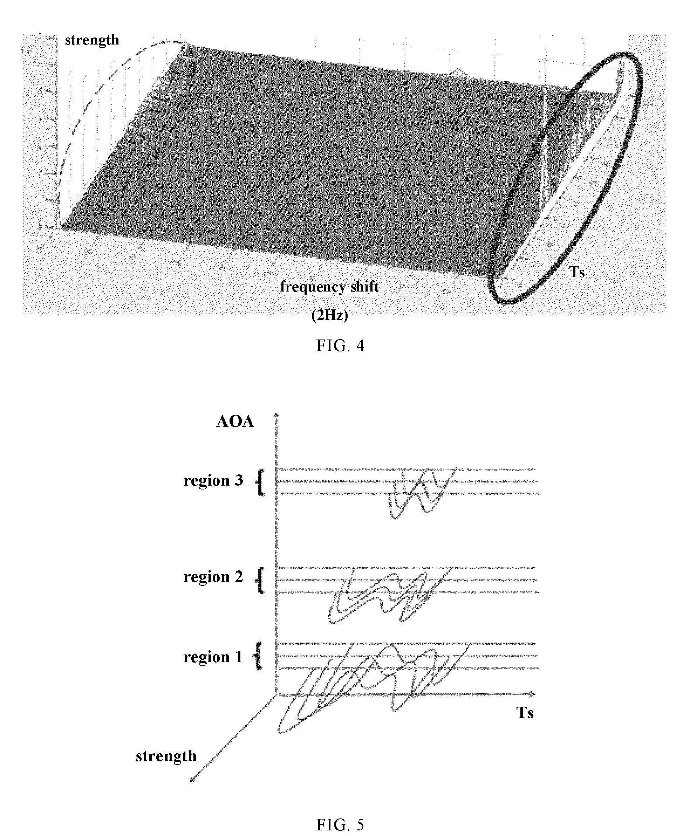

A form of the delay Doppler spectrum is shown in FIG. 4, and the delay Doppler spectrum includes strength values under different frequency shifts and different delays (Ts).

In some specific applications, what are desired to be sensed by environmental sensing are merely stationary objects such as buildings and terrains in the environment, rather than moving objects such as vehicles and pedestrians.

In the delay Doppler spectrum, a frequency shift is generally caused by a motion of an object (an object which reflects the sensing signal). Thus, a preset threshold (H) may be set in advance for the frequency shifts according to experience or simulation calculation. Referring to the solid circle in FIG. 4, part of the data (which hardly involve the frequency shifts) with the frequency shifts within [-H, H] is extracted from the delay Doppler spectrum as the environment data, and the angular energy is calculated based on the environment data; and referring to the dashed circle in FIG. 4, the data having the larger frequency shifts are not considered even if the responses exist. Thus, the objects determined according to the above environment data are all "stationary objects", and the unnecessary "moving objects" are excluded.

It should be understood that if the moving objects are desired to be sensed in some applications or it can be determined that there is no moving object in the environment, the above operation of extracting the environment data may not be performed.

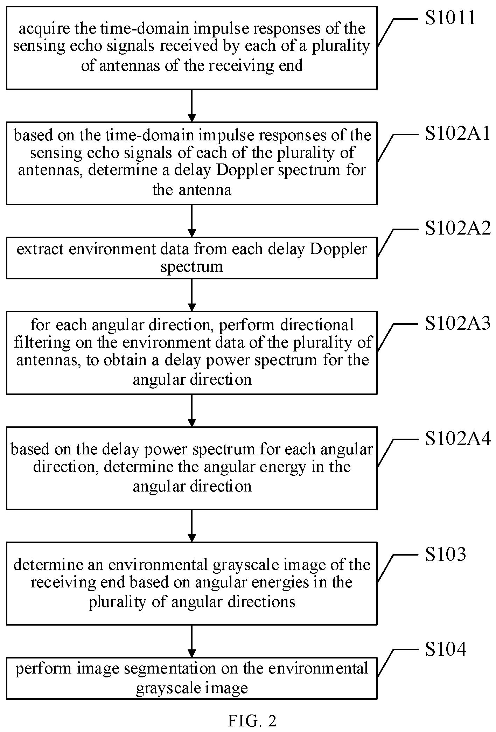

In some embodiments, the receiving end is provided with a plurality of antennas. Referring to FIG. 2, acquiring the time-domain impulse responses of the sensing echo signals received by the receiving end (S101) includes operation S1011.

At operation S1011, the time-domain impulse responses of the sensing echo signals received by each of the plurality of antennas of the receiving end are acquired.

In an implementation of the embodiments of the present disclosure, the receiving end may be provided with the plurality of antennas, that is, provided with multiple antenna elements and channels, and each of the antennas of the receiving end may receive the sensing echo signals independently. Thus, corresponding time-domain impulse response data may be obtained for each of the antennas, for example, the delay Doppler spectrum is obtained for each of the antennas.

In particular, when the receiving end is provided with the multiple antenna elements and channels, the receiving end may receive signals in a plurality of directions "at the same time". Therefore, the transmitting end may transmit the sensing signals "once" (such as transmitting once in an omnidirectional manner), and the receiving end may receive the sensing echo signals at the same time, so that environmental sensing can be performed in a short time, which further improves efficiency.

In some embodiments, determining the angular energy of the receiving end in each of the plurality of angular directions within the preset continuous angle range based on the time-domain impulse responses of the sensing echo signals (S102) includes the following operations S1023 and S1024.

At operation S1023, for each of the plurality of angular directions, directional filtering is performed on the time-domain impulse responses of the sensing echo signals received by the plurality of antennas to obtain a delay power spectrum for the angular direction.

At operation S1024, based on the delay power spectrum for each of the plurality of angular directions, the angular energy in the angular direction is determined.

When the receiving end is provided with the plurality of antennas, the corresponding time-domain impulse response data also corresponds to the plurality of antennas. Therefore, for each of the angular directions, directional filtering may be performed on the time-domain impulse response data of the plurality of antennas (e.g., the environment data of the plurality of antennas) based on a vector direction of the angular direction, so as to separate the data corresponding to the angular direction, i.e., the delay power spectrum (strengths under different delays) for the angular direction.

Specifically, the above directional filtering may be performed in a traversal manner.

For example, if the preset continuous angle range is such that azimuth angles are within [α1, α2], elevation angles are within [β1, β2], an azimuth step (or resolution) is dα, and an elevation step (or resolution) is dβ, starting from a preset angle of (α1, β1), each combination of k and i in (α1+kdα, β1+idβ) may be respectively subjected to directional filtering, with k being an integer taken from the range of [0, (α2-α1)/dα], and i being an integer taken from the range of [0, (β2-β1)/dβ].

Further, the delay power spectra for the plurality of angular directions may be further combined into a "delay angle spectrum", so as to further determine the angular energy based on the delay angle spectrum.

For example, the delay angle spectrum is shown in FIG. 5, and includes a strength under each delay (Ts) at each AOA (angular direction).

The three regions in FIG. 5 correspond to three objects capable of reflecting the sensing signals, i.e., three ranges within which the sensing echo signals are actually received, there are a plurality of delay-strength curves for different angular directions in each of the regions, and for other direction directions, the strengths are all 0 because there is no object in the other angular directions.

In some embodiments, determining, based on the delay power spectrum for each of the plurality of angular directions, the angular energy in the angular direction (S1024) includes operation S10241.

At operation S10241, a maximum amplitude or an average amplitude in the delay power spectrum for each of the plurality of angular directions is determined as the angular energy in the angular direction.

Each of the angular directions corresponds to different strengths under different delays. If the angular direction further corresponds to a certain frequency shift range, strength distributions under different frequency shifts are also different, but merely one angular energy (grayscale value) is finally determined. Thus, for each of the angular directions, a maximum value may be selected from all strength amplitude values of the angular direction as the angular energy, or an average value of a plurality of strength amplitudes may be selected as the angular energy, and then a corresponding grayscale value is determined according to the angular energy.

It should be understood that it is also feasible to determine the angular energy in each of the angular directions with other methods (such as taking a median and taking a weighted average).

In some embodiments, determining, based on the delay power spectrum for each of the plurality of angular directions, the angular energy in the angular direction (S1024) includes the following operations S102421 and S102422.

At operation S102421, a relative distance and an amplitude peak of at least one sample point in the delay power spectrum for each of the plurality of angular directions are determined.

At operation S102422, a grayscale value of a pixel represents the amplitude peak of the sample point in the corresponding angular direction.

The pixel further includes the relative distance value of the sample point in the corresponding angular direction.

The delay further reflects a transmission distance of a signal, and the transmission distance may reflect distribution of objects in an environment. Therefore, based on a specific delay of a sample point in the delay power spectrum, a corresponding distance (relative distance) and a corresponding amplitude peak (angular energy) may be determined, so that a grayscale value of a corresponding pixel in the environmental grayscale image may be calculated based on the amplitude peak; meanwhile, the relative distance is also marked on the corresponding pixel, so that the environmental grayscale image may reflect more information.

The sample point may be specifically selected with various methods, such as selecting a preset number of sample points with larger strengths from sample points with strengths exceeding a preset strength threshold.

It should be understood that the above content of determining the delay power spectrum based on the time-domain impulse responses is a description of a specific format of the time-domain impulse response data, and the above content of performing directional filtering is a description of a process of determining the angular energy in each of the angular directions in a case of the plurality of antennas, and both descriptions are directed to the different contents, and thus can exist at the same time.

For example, referring to FIG. 2, in the embodiments of the present disclosure, determining the angular energy of the receiving end in each of the plurality of angular directions within the preset continuous angle range based on the time-domain impulse responses of the sensing echo signals (S102) may include the following operations S102A1 to S102A4.

At operation S102A1, based on the time-domain impulse responses of the sensing echo signals of each of the plurality of antennas, a delay Doppler spectrum for the antenna is determined.

At operation S102A2, environment data is extracted from each of delay Doppler spectrums.

At operation S102A3, for each of the plurality of angular directions, directional filtering is performed on the environment data of the plurality of antennas, so as to obtain a delay power spectrum for the angular direction.

At operation S102A4, based on the delay power spectrum for each of the plurality of angular directions, the angular energy in the angular direction is determined.

In some embodiments, referring to FIG. 2, after determining the environmental grayscale image of the receiving end based on the angular energies in the plurality of angular directions (S103), the method further includes operation S 104.

At operation S104, image segmentation is performed on the environmental grayscale image.

The environmental grayscale image may represent the distribution of the objects in the environment, and the grayscale values of the pixels corresponding to a continuous surface of an object are generally the same or similar in the environmental grayscale image. Thus, the environment grayscale image may be segmented with the image segmentation technology in the field of image processing, so as to separate different objects from the environment grayscale image.

Various specific image segmentation algorithms may be adopted, such as threshold-based image segmentation, continuity-based image segmentation, or image segmentation by a pre-trained neural network.

Illustratively, some specific examples of the method of wirelessly sensing environmental grayscale according to the embodiments of the present disclosure are described below.

Referring to FIG. 3, an environmental grayscale wireless sensing system includes one transmitting end and two receiving ends (the receiving end 1 and the receiving end 2), each receiving end is provided with a plurality of antennas, the transmitting end transmits wide-beam sensing signals (see the oblique line region in FIG. 3), the stationary objects (the object 1 and the object 2) in the environment may reflect part of the sensing signals, and the two receiving ends respectively receive different sensing echo signals due to different locations of the two receiving ends.

Correspondingly, for each receiving end, the method of wirelessly sensing environmental grayscale according to the embodiments of the present disclosure may include the following operations A101 to A106.

At operation A101, the receiving end receives the sensing echo signals, analyzes and calculates the time-domain impulse responses of the sensing echo signals received by the plurality of antennas, and performs distance-matched filtering on the sensing echo signals to obtain the delay Doppler spectrum as shown in FIG. 4 for each of the antennas.

At operation A102, the frequency shift threshold H is set according to experience or simulation calculation, and the data with the frequency shifts with [-H, H] (the data within the solid circle in FIG. 4) is extracted from the delay Doppler spectrum for each of the antennas as the environment data.

Referring to FIG. 4, some data peaks (the data within the dashed circle) also exist at positions of the largest frequency shift, which indicates that a moving object (such as a pedestrian) actually exists in the environment in FIG. 3 and causes the above peaks, but those data peaks are not selected as the environment data, so that the subsequent sensing process is not affected.

At operation A103, spatial traversal filtering is performed on the environment data of the plurality of antennas.

Under the conditions that the azimuth step is dα and the elevation step is dβ, each combination of k and i in (α1+kdα, β1+idβ) is respectively subjected to directional filtering, with k being an integer taken from the range of [0, (α2-α1)/dα], and i being an integer taken from the range of [0, (β2-β1)/dβ]. Thus, all the angular directions within an azimuth range of [α1, α2] and an elevation range [β1, β2] are traversed.

At operation A104, the delay angle spectrum is obtained based on a result of the spatial traversal filtering, with the delay angle spectrum including an energy value corresponding to a vector direction of each of the filtering directions (angular directions).

At operation A105, the data with a maximum energy amplitude in each of the angular directions is selected from the delay angle spectrum as the angular energy in the angular direction.

At operation A106, based on the angular energy in each of the angular directions, the corresponding grayscale values are assigned to the corresponding pixels in the radar map to obtain the environmental grayscale image.

The environmental grayscale images obtained for the receiving end 1 and the receiving end 2 are shown in FIG. 6 and FIG. 7, respectively.

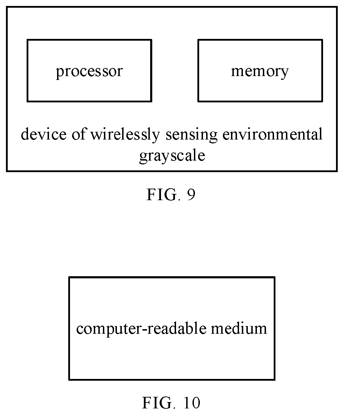

In a second aspect, referring to FIG. 9, an embodiment of the present disclosure provides a device of wirelessly sensing environmental grayscale, including a memory and a processor, the memory stores a computer program executable by the processor, and when the computer program is executed by the processor, the method of wirelessly sensing environmental grayscale according to any of the embodiments of the present disclosure is implemented.

The device of wirelessly sensing environmental grayscale according to the embodiment of the present disclosure can perform the above method of wirelessly sensing environmental grayscale, that is, can implement the above signal processing process.

In some embodiments, the device of wirelessly sensing environmental grayscale is a receiving end.

Further, the device of wirelessly sensing environmental grayscale may be a receiving end (e.g., a communication base station), that is, the receiving end may directly process received signals, so as to achieve environmental sensing.

It should be understood that it is also feasible that the device of wirelessly sensing environmental grayscale is a device (e.g. a control server) with a data processing capability other than the receiving end.

In a third aspect, referring to FIG. 10, an embodiment of the present disclosure provides a computer-readable medium having stored thereon a computer program which, when executed by a processor, implements the method of wirelessly sensing environmental grayscale according to any of the embodiments of the present disclosure.

The processor is a device having a data processing capability, and includes, but is not limited to, a Central Processing Unit (CPU); the memory is a device having a data storage capability, and includes, but is not limited to, a Random Access Memory (RAM, more specifically, a Synchronous Dynamic RAM (SDRAM), a Double Data Rate SDRAM (DDR SDRAM), etc.), a Read-Only Memory (ROM), an Electrically Erasable Programmable Read-Only Memory (EEPROM), and a flash memory (FLASH); and an input/output (I/O) interface (read/write interface) is connected between the processor and the memory for enabling information interaction therebetween, and the I/O interface includes, but is not limited to, a data bus (Bus).

It should be understood by those of ordinary skill in the art that the functional modules/units in all or some of the operations, systems and devices disclosed above may be implemented as software, firmware, hardware, or suitable combinations thereof.

If implemented as hardware, the division between the functional modules/units stated above is not necessarily corresponding to the division of physical components; and for example, one physical component may have a plurality of functions, or one function or operation may be performed through cooperation of several physical components.

Some or all of the physical components may be implemented as software executed by a processor, such as a CPU, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM (more specifically, an SDRAM, a DDR, etc.), an ROM, an EEPROM, a flash memory or other magnetic disks, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A method of wirelessly sensing environmental grayscale, comprising:
acquiring time-domain impulse responses of sensing echo signals received by a receiving end, wherein the sensing echo signals are signals formed when sensing signals simultaneously transmitted by a transmitting end within a continuous spatial range arrive at the receiving end;
determining an angular energy of the receiving end in each of a plurality of angular directions within a preset continuous angle range based on the time-domain impulse responses of the sensing echo signals, wherein the angular energy represents a strength of the time-domain impulse responses of the sensing echo signals in the angular direction; and
determining an environmental grayscale image of the receiving end based on angular energies in the plurality of angular directions, wherein the environmental grayscale image comprises pixels corresponding to the angular directions, and grayscale values of the pixels represent the angular energies in corresponding angular directions.

2. The method of claim 1, wherein determining the angular energy of the receiving end in each of the plurality of angular directions within the preset continuous angle range based on the time-domain impulse responses of the sensing echo signals comprises:
determining a delay Doppler spectrum based on the time-domain impulse responses of the sensing echo signals; and
determining the angular energy of the receiving end in each of the plurality of angular directions within the preset continuous angle range based on the delay Doppler spectrum.

3. The method of claim 2, wherein determining the angular energy of the receiving end in each of the plurality of angular directions within the preset continuous angle range based on the delay Doppler spectrum comprises:
extracting environment data from the delay Doppler spectrum, wherein the environment data is data in the delay Doppler spectrum which has an absolute value of a frequency shift being less than a preset threshold; and
determining the angular energy of the receiving end in each of the plurality of angular directions within the preset continuous angle range based on the environment data.

4. The method of claim 1, wherein the receiving end is provided with a plurality of antennas, and acquiring the time-domain impulse responses of the sensing echo signals received by the receiving end comprises:
acquiring the time-domain impulse responses of the sensing echo signals received by each of the plurality of antennas of the receiving end.

5. The method of claim 4, wherein determining the angular energy of the receiving end in each of the plurality of angular directions within the preset continuous angle range based on the time-domain impulse responses of the sensing echo signals comprises:
for each of the plurality of angular directions, performing directional filtering on the time-domain impulse responses of the sensing echo signals received by the plurality of antennas to obtain a delay power spectrum for the angular direction; and
determining, based on the delay power spectrum for each of the plurality of angular directions, the angular energy in the angular direction.

6. The method of claim 5, wherein determining, based on the delay power spectrum for each of the plurality of angular directions, the angular energy in the angular direction comprises:
determining a maximum amplitude or an average amplitude in the delay power spectrum for each of the plurality of angular directions as the angular energy in the angular direction.

7. The method of claim 1, wherein after determining the environmental grayscale image of the receiving end based on the angular energies in the plurality of angular directions, the method further comprises:
performing image segmentation on the environmental grayscale image.

8. The method of claim 1, wherein
the sensing signals are omnidirectional signals transmitted once by the transmitting end; or
the sensing signals are transmitted by the transmitting end in a plurality of directions for a plurality of times.

9. The method of claim 1, wherein
the transmitting end is a communication base station; and
the receiving end is a communication base station.

10. A device of wirelessly sensing environmental grayscale, comprising a memory and a processor, and
the memory stores a computer program executable by the processor, and when the computer program is executed by the processor, the processor implements the method of wirelessly sensing environmental grayscale of any one of claims 1 to 9.

11. The device of claim 10, wherein
the device of wirelessly sensing environmental grayscale is the receiving end.

12. A computer-readable medium having stored there on a computer program which, when executed by a processor, causes the processor to implement the method of wirelessly sensing environmental grayscale of any one of claims 1 to 9.
